# Europäisches Patentamt
## European Patent Office
## Office européen des brevets

(19)

(11) Veröffentlichungsnummer: **0 128 305**
**B1**

(12) **EUROPÄISCHE PATENTSCHRIFT**

(45) Veröffentlichungstag der Patentschrift:
**18.03.87**

(21) Anmeldenummer: **84104231.0**

(22) Anmeldetag: **13.04.84**

(51) Int. Cl.⁴: **C 04 B 28/22,** C 04 B 28/24,
C 04 B 38/08, C 04 B 14/18

(54) Verfahren zur Herstellung von nicht-brennbaren, thermisch isolierenden Formkörpern aus gebIähtem Perlit.

(30) Priorität: **13.04.83 DE 3313386**

(43) Veröffentlichungstag der Anmeldung:
**19.12.84 Patentblatt 84/51**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
DE-A-1 908 049
DE-B-1 303 249
FR-A-1 566 189
GB-A-1 234 078

CHEMICAL ABSTRACTS, Band 89, 1978, Seite 399,
Nr. 134451u, Columbus, Ohio, USA;

(73) Patentinhaber: **Fraunhofer- Gesellschaft zur Förderung der angewandten Forschung e.V., Leonrodstrasse 54, D-8000 München 19 (DE)**

(72) Erfinder: **Schmidt, Helmut, Tilman- Riemenschneider- Strasse 15, D-8706 Höchberg (DE)**
Erfinder: **Tur, Peter, Gregor- Mendel- Strasse 2, D-8702 Gerbrunn (DE)**

(74) Vertreter: **Barz, Peter, Dr., Patentanwälte Dr. V. Schmied- Kowarzik Dipl.- Ing. G. Dannenberg Dr. P. Weinhold Dr. D. Gudel Dipl.- Ing. S. Schubert Dr. P. Barz Siegfriedstrasse 8, D-8000 München 40 (DE)**

**Beschreibung**

Die Erfindung betrifft ein Verfahren zur Herstellung von nicht-brennbaren, thermisch isolierenden Formkörpern aus geblähtem Perlit.

Thermisch isolierende Werkstoffe müssen eine niedrige Rohdichte und ein feinporiges Gefüge aufweisen, um die gewünschte Wärmedämmung zu erzielen. Im Bereich der anorganischen Werkstoffe kann dies z.B. dadurch bewirkt werden, daß man poröse Materialien, wie Bims oder geblähten Perlit, als Leichtzuschlagstoffe anderen spezifisch schwereren Materialien, wie Zement oder Beton, zusetzt. Bei der Herstellung leichter Isolierkörper (Rohdichte unter 1000 kg/m³) sind dabei Grenzen gesetzt durch die erforderliche Festigkeit, die ein Werkstück aufweisen muß, damit es Transport und Einbau ohne Beschädigung übersteht.

Perlit, der nach dem Blähen als leichtes körniges Produkt mit einem Schüttgewicht von etwa 30 bis 150 g/l und einer Korngröße im allgemeinen unter 6 mm anfällt, weist zwar gute thermische Isoliereigenschaften auf, hat jedoch eine geringe Kornfestigkeit.

Um dennoch für die Praxis geeignete Festigkeiten zu erzielen, wurden bereits verschiedene Perlitprodukte mit organischen oder anorganischen Bindemitteln vorgeschlagen. So wird in der DE-B-27 43 168 ein Harnstoff-Formaldehydharz als Binder zur Herstellung von Perlitplatten eingesetzt, während in der JP-B-7573/73 Materialien auf Wasserglasbasis Verwendung finden. Der Einsatz organischer Binderharze bedingt jedoch aufgrund der Brennbarkeit dieser Harze einen begrenzten thermischen Einsatzbereich (< 250°C) für das fertige Perlitprodukt. Andererseits sind unter Verwendung von Wasserglas hergestellte Formkörper zwar unbrennbar, jedoch können bei Kontakt mit Wasser unerwünschte Nebenwirkungen auftreten, wenn Alkali freigesetzt und an die Umgebung abgegeben wird.

Aus der DE-A-1 908 049 ist ein Verfahren zur Herstellung wärmeisolierender leichter Formkörper bekannt, bei dem natürliche oder künstliche verschäumte Silikatpartikel mit Kalk gemischt, zu Formkörpern geformt und - wenn zur Formerhaltung notwendig - gepreßt und in einer Wasserdampf enthaltenden Atmosphäre durch Reaktion zwischen den verschäumten Silikatpartikeln und Kalk unter Auflösen oder Anlösen der Silikatpartikel gehärtet werden.

In der FR-A-1 566 189 wird geblähter Perlit zusammen mit Kalk als Bindemittel zur Herstellung von isolierenden Formkörpern verwendet, wobei jedoch ebenfalls eine Dampfhärtung erforderlich ist.

Es ist auch bereits bekannt, daß fein vermahlene silicatische Zuschlagstoffe in Kombination mit Kalk hydraulische Eigenschaften zeigen; siehe z.B. DE-B-16 46 491. Hierbei reagiert das Siliciumdioxid der silikatischen Zuschlagstoffe mit dem Kalkhydrat und bildet neue Phasen, sogenannte Calcium-Silicat-Hydrate (CSH-Phasen). Diese CSH-Phasen umschließen den Leichtzuschlagstoff als Bindermatrix, so daß relativ hohe Bindemittelmengen erforderlich sind.

Überraschenderweise wurde nun gefunden, daß nicht-vermahlener geblähter Perlit, der eine relativ kleine reaktive Oberfläche aufweist, auch ohne hydraulische Feinstkomponenten mit Kalkhydrat soweit reagieren kann, daß eine feste Verbindung von Korn zu Korn entsteht. Es hat sich gezeigt, daß mit Bindemittelmengen von nur 3 bis 20 Gewichtsprozent stabile Produkte mit einer Rohdichte herab bis zu 150 kg/m³ hergestellt werden können. Hierbei ist nicht die gesamte Oberfläche des Perlitkorns mit Bindemittel bedeckt, bzw. dieses ist nicht in eine Bindermatrix eingelagert, sondern es liegen überwiegend Punktberührungen der einzelnen Partikel über das Bindemittel vor, das im Falle von Kalkhydrat vollständig in CSH-Phasen umgewandelt worden ist.

Völlig überraschend ist, daß die genannten Produkte auch durch Kaltabbindung, d.h. ohne Dampfhärtungsprozeß, erhalten werden. Hierbei entstehen dann gelartige CSH-Phasen.

In jedem Fall ist es jedoch für die geschilderten Produkteigenschaften erforderlich, das Verpressen der Mischung aus geblähtem Perlit und Bindemittel innerhalb eines spezifischen Preßdruckbereiches von 0,1 bis 1,5 MN/m² durchzuführen. Nur hierdurch werden für praktische Zwecke geeignete Druckfestigkeiten erzielt, wobei überraschenderweise die Festigkeit der mit den außerordentlich geringen Bindemittelmengen erhaltenen Perlit-Formkörper höher ist als die Eigenfestigkeit des Perlitkorns. Dieser Effekt läßt sich unter Aufrechterhaltung der für die Wärmeisolation erforderlichen niedrigen Rohdichten allerdings nur mit den erfindungsgemäß angewandten geringen Bindemittelmengen erzielen. Bei Verwendung großer Bindemittelmengen ergibt das Verpressen mit hohem Preßdruck für gute Wärmeisolation unbrauchbare Rohdichten. Dies hat seinen Grund in den besonderen Eigenschaften des Perlits, die dazu führen, daß unter den erfindungsgemäß angewandten Bedingungen ein festerer Gefügeaufbau entsteht.

Weitere Versuche haben ergeben, daß die geschilderten Ergebnisse auch dann erzielt werden, wenn man anstelle von Kalkhydrat Kieselsäureester als Bindemittel in den genannten Mengenverhältnissen und unter Anwendung des genannten Preßdruckes einsetzt. Dies war an sich nicht zu erwarten, da aufgrund der Porosität des Perlits damit gerechnet werden mußte, daß ein nicht unbeträchtlicher Bindemittelanteil vom Perlitkorn absorbiert und somit nicht mehr für Bindungszwecke zur Verfügung stehen würde.

Gegenstand der Erfindung ist ein Verfahren zur Herstellung von nicht-brennbaren, thermisch isolierenden Formkörpern aus geblähtem Perlit durch Vermischen von Perlit, Wasser und einem Bindemittel, anschließendes Verpressen und Trocknen des erhaltenen Formkörpers, das dadurch gekennzeichnet ist, daß man 3 bis 20 Gewichtsprozent, bezogen auf das Trockengewicht der Mischung aus Perlit und Bindemittel, eines Bindemittels aus der Gruppe (a) Kalkhydrat und (b) Kieselsäureestern der Formel

Si(OR)$_4$

wobei R ein geradkettiger oder verzweigter Alkylrest mit 1 bis 6 Kohlenstoffatomen ist, verwendet und die Mischung bei einem Preßdruck von 0,1 bis 1,5 MN/m$^2$ verpreßt.

Der im erfindungsgemäßen Verfahren eingesetzte geblähte Perlit hat eine Korngröße von gewöhnlich mindestens 0,1 mm, vorzugsweise mindestens 0,2 mm, und bis zu 6 mm, vorzugsweise bis zu 1 mm. Sein Schüttgewicht beträgt im allgemeinen 30 bis 150 g/l, vorzugsweise 50 bis 100 g/l.

Bei Verwendung von Kalkhydrat als Bindemittel wird dieses in Form von ungelöschtem oder gelöschtem Kalk eingesetzt. Die Kalkhydratmenge beträgt 3 bis 20 Gewichtsprozent, vorzugsweise 5 bis 10 Gewichtsprozent, bezogen auf das Trockengewicht der Mischung aus Perlit und Bindemittel. Die weitere Verarbeitung erfolgt z.B. folgendermaßen: Wasser wird in ausreichender Menge zugesetzt, um eine homogene Mischung (feuchter, körniger bis gießfähiger Versatz) zu erhalten. Nach Zugate des Perlits rührt man bei Raumtemperatur, bringt die Mischung in eine Preßform ein und verpreßt mit einem Preßdruck von 0,1 bis 1,5 MN/m$^2$, vorzugsweise 0,5 bis 1,0 MN/m$^2$, zu dem gewünschten Formkörper. Dabei muß darauf geachtet werden, daß der Entspannungsprozeß nach dem Pressen langsam erfolgt, da andernfalls die im Perlit eingeschlossene Luft beim schnellen Expandieren zu einer Störung des Korngefüges führt und die Herstellung kompakter Körper verhindert. Die aus der Form entnommenen Teile werden schließlich bei Raumtemperatur oder erhöhter Temperatur von z.B. 150 bis 250° C getrocknet.

Bei Verwendung von Kieselsäureestern, wie Tetramethoxysilan oder Tetraethoxysilan, als Bindemittel wird z.B. eine Emulsion aus dem Kieselsäureester und Wasser hergestellt und zu dem Perlit gegeben. Anschließend erfolgt die Zugabe einer wäßrigen Lösung eines sauren oder basischen Katalysators, wie HCl, H$_2$SO$_4$, NaOH oder NH$_4$OH, um die Hydrolyse und Kondensation des Kieselsäureesters zu katalysieren. Der Katalysator kann auch der Emulsion kurz vor deren Zugabe zu dem Perlit zugesetzt werden.

Das Mengenverhältnis Bindemittel : Perlit und die sonstigen Verarbeitungsbedingungen entsprechen denen, die vorstehend für die Verwendung von Kalkhydrat als Bindemittel angegeben wurden.

Nach dem erfindungsgemäßen Verfahren können Perlitprodukte verschiedener Form hergestellt werden, z.B. Platten, Halbrohre oder andere Formkörper. Diese Produkte sind nichtbrennbar und haben ausgezeichnete Wärmeisoliereigenschaften. Ihre Rohdichte beträgt gewöhnlich 150 bis 250 kg/m$^3$ und ihre Druckfestigkeit liegt im allgemeinen im Bereich von 0,2 bis 0,6 MN/m$^2$, im Falle der Dampfhärtung bis zu 1,5 MN/m$^2$.

Zur zusätzlichen Erhöhung der Festigkeit können gegebenenfalls übliche Verstärkungsmaterialien eingesetzt werden, z.B. anorganische Fasern, wie Glasfasern, Kohlefasern oder Schlackenwolle. Die Verstärkungsmaterialien können im Falle von Kalkhydrat als Bindemittel z.B. der Mischung aus Kalkhydrat und Wasser vor Zugabe des Perlits zugemischt werden. Im Falle von Kieselsäureestern als Bindemittel vermengt man z.B. den Perlit vor Zugabe der Emulsion trocken mit den faserförmigen Verstärkungsmaterialien.

Um den Formkörpern zusätzlich verbesserte Biegezugfestigkeit und Abriebfestigkeit zu verleihen, können Kaschierungen, z.B. Glasfaservliese, direkt beim Verpressen der Rohmischung aufgebracht werden. Bei Verbundplatten dieser Art mit Kalkhydrat als Bindemittel haftet das Vlies ohne zusätzliche Maßnahmen. Bei Perlitplatten mit Kieselsäureestern als Bindemittel wird für die Kaschierung vorzugsweise zusätzlich eine Klebeschicht aus Perlitmehl und Bindemittel vorgesehen.

Gegenstand der Erfindung sind auch Perlit-Zusammensetzungen, die geblähten Perlit, Wasser und 5 bis 10 Gewichtsprozent, bezogen auf das Trockengewicht der Mischung aus Perlit und Bindemittel, eines Bindemittels aus der Gruppe (a) Kalkhydrat und (b) Kieselsäureestern der Formel

Si(OR)$_4$

wobei R ein geradkettiger oder verzweigter Alkylrest mit 1 bis 6 Kohlenstoffatomen ist, sowie gegebenenfalls Verstärkungsmaterialien enthalten.

Diese Zusammensetzungen stellen gießfähige Massen dar, die z.B. auch in Hohlräume von Bauteilen eingefüllt werden können und dort unter Umgebungsbedingungen (ohne Dampfhärtung) zu Isolierkörpern ohne nennenswerte Schrumpfung abbinden.

Die folgenden Beispiele erläutern die Erfindung.

## Beispiel 1

4 Liter Perlit (Körnung 0,2 bis 1 mm, Schüttgewicht 50 bis 60 g/l) werden innerhalb von 3 Minuten in eine Mischung aus 50 g Kalkhydrat und 2 Liter Wasser eingerührt. Anschließend wird der Versatz mit 0,53 MN/m$^2$ verpreßt. Nach dem Trocknen bei 200° C weist die Probe eine Druckfestigkeit von 0,49 MN/m$^2$ und eine Rohdichte von 238 kg/m$^3$ auf.

**Beispiel 2**

4 Liter Perlit (Körnung 0,2 bis 1 mm, Schüttgewicht 50 bis 60 g/l) werden innerhalb von 3 Minuten in eine Mischung aus 12,5 g Kalkhydrat und 2 Liter Wasser eingerührt. Anschließend wird der Versatz mit 0,53 NM/m$^2$ verpreßt. Nach der Trocknung bei 200°C weist die Probe eine Druckfestigkeit von 0,42 MN/m$^2$ und eine Rohdichte von 183 kg/m$^3$ auf.

**Beispiel 3**

4 Liter Perlit (Körnung 0,2 bis 1 mm, Schüttgewicht 50 bis 60 g/l) werden innerhalb von 3 Minuten in eine Mischung aus 12,5 g Kalkhydrat und 2 Liter Wasser eingerührt. Anschließend wird der Versatz mit 0,80 NM/m$^2$ verpreßt. Nach der Trocknung bei 200°C weist die Probe eine Druckfestigkeit von 0,56 NM/$^2$ und eine Rohdichte von 246 kg/m$^2$ auf.

**Beispiel 4**

2 Liter Perlit (Korngröße 0,2 bis 3 mm, Schüttgewicht 40 bis 50 g/l) werden mit 260 ml einer Bindermischung versetzt, die Wasser mit einem Anteil von 3 Gewichtsprozent Tetraethoxysilan enthält. Nach dem Durchmischen gibt man 40 ml einer 2gewichtsprozentigen Natronlauge als Katalysator zu und mischt nochmals. Anschließend wird der Versatz mit 0,17 MN/m$^2$ verpreßt. Nach dem Trocknen bei 200°C weist die Probe eine Druckfestigkeit von 0,17 MN/m$^2$ und eine Rohdichte von 168 kg/m$^3$ auf.

**Beispiel 5**

Das Verfahren von Beispiel 4 wird wiederholt, jedoch wendet man einen Preßdruck von 0,52 MN/m$^2$ an. Die erhaltene Probe hat eine Druckfestigkeit von 0,42 MN/m$^2$ und eine Rohdichte von 240 kg/m$^3$.

**Patentansprüche**

1. Verfahren zur Herstellung von nicht-brennbaren, thermisch isolierenden Formkörpern aus geblähtem Perlit durch Vermischen von Perlit, Wasser und einem Bindemittel, anschließendes Verpressen und Trocknen des erhaltenen Formkörpers, dadurch gekennzeichnet, daß man 3 bis 20 Gewichtsprozent, bezogen auf das Trockengewicht der Mischung aus Perlit und Bindemittel, eines Bindemittels aus der Gruppe (a) Kalkhydrat und (b) Kieselsäureestern der Formel

Si(OR)$_4$

wobei R ein geradkettiger oder verzweigter Alkylrest mit 1 bis 6 Kohlenstoffatomen ist, verwendet und die Mischung bei einem Preßdruck von 0,1 bis 1,5 MN/m$^2$ verpreßt.

2. Verfahren nach Anspruch 1, dadurch gekennzeichnet, daß man 5 bis 10 Gewichtsprozent Bindemittel, bezogen auf das Trockengewicht der Mischung aus Perlit und Bindemittel, verwendet.

3. Verfahren nach Ansbruch 1 oder 2, dadurch gekennzeichnet, daß man einen Preßdruck von 0,5 bis 1,0 MN/m$^2$ anwendet.

4. Verfahren nach einem der Ansprüche 1 bis 3, dadurch gekennzeichnet, daß man geblähten Perlit mit einer Korngröße von 0,1 bis 6 mm verwendet.

5. Verfahren nach einem der Ansprüche 1 bis 4, dadurch gekennzeichnet, daß man dem Perlit, dem Bindemittel oder deren Mischung vor dem Verpressen ein vorzugsweise faserförmiges Verstärkungsmaterial zusetzt.

6. Verfahren nach einem der Ansprüche 1 bis 5, dadurch gekennzeichnet, daß man den Formkörper während dem Verpressen mit einer Kaschierung, z.B. einem Glasfaservlies, versieht.

7. Perlit-Zusammensetzung, dadurch gekennzeichnet, daß sie geblähten Perlit und 5 bis 10 Gewichtsprozent, bezogen auf das Trockengewicht der Mischung aus Perlit und Bindemittel, eines Bindemittels aus der Gruppe (a) Kalkhydrat und (b) Kieselsäureestern der Formel

Si(OR)$_4$

wobei R ein geradkettiger oder verzweigter Alkylrest mit 1 bis 6 Kohlenstoffatomen ist, sowie Wasser enthält.

8. Perlit-Zusammensetzung nach Anspruch 7, dadurch gekennzeichnet, daß sie geblähten Perlit mit einer Korngröße von 0,1 bis 6 mm enthält.

9. Perlit-Zusammensetzung nach Anspruch 7 oder 8, dadurch gekennzeichnet, daß sie zusätzlich ein Verstärkungsmaterial enthält.

10. Perlit-Zusammensetzung nach Anspruch 9, dadurch gekennzeichnet, daß sie ein faserförmiges Verstärkungsmaterial enthält.

**Claims**

1. A method of producing non-inflammable thermally insulating moulded articles of expanded perlite, which comprises mixing perlite, water and a binding agent and subsequent pressing and drying of the moulded article obtained, characterized in that 3 to 20 weight percent, based on the dry weight of the mixture of perlite and binding agent, of a binding agent selected from the group consisting of (a) hydrate of lime and (b) silicic acid esters having the formula

Si(OR)$_4$

wherein R is a straight-chain or branched alkyl group of 1 to 6 carbon atoms, are used and the mixture is pressed at a pressure of from 0.1 to 1.5 MN/m².

2. A process according to claim 1, wherein 5 to 10 weight percent of binding agent, based on the dry weight of the mixture of perlite and binding agent, are used.

3. A process according to claim 1 or 2, wherein the pressing pressure is from 0.5 to 1.0 MN/m².

4. A process according to one of claims 1 to 3, wherein expanded perlite having a grain size of from 0.1 to 6 mm is used.

5. A process according to one of claims 1 to 4, wherein a, preferably fibrous, reinforcing material is added to the perlite, the binding agent or a mixture thereof before pressing.

6. A process according to one of claims 1 to 5, wherein the moulded article is provided, during pressing, with a backing, for example, a nonwoven glass fibre mat.

7. A perlite composition, characterized in that it contains expanded perlite and from 5 to 10 weight percent, based on the dry weight of the mixture of perlite and binding agent, of a binding agent selected from the group consisting of (a) hydrate of lime and (b) silicic acid esters having the formula
Si(OR)₄
wherein R is a straight-chain or branched alkyl group of 1 to 6 carbon atoms, as well as water.

8. A perlite composition according to claim 7, which contains expanded perlite having a grain size of from 0.1 to 6 mm.

9. A perlite composition according to claim 7 or 8 which, additionally, contains a reinforcing material.

10. A perlite composition according to claim 9, which contains a fibrous reinforcing material.

**Revendications**

1. Procédé pour fabriquer des corps moulés ignifuges et thermorésistants en perlite expansée, par mélange de la perlite, de l'eau et d'un liant, puis compression et séchage du corps moulé obtenu, procédé caractérisé en ce qu'on utilise 3 à 20 % en poids, par rapport au poids sec du mélange de perlite et de liant, d'un liant choisi dans le groupe formé par (a) l'hydrate de calcium et (b) les esters de l'acide silicique de formule:
Si(OR)₄
dans laquelle R représente un reste alkyle linéaire ou ramifié ayant 1 à 6 atomes de carbone, et l'on comprime le mélange sous une pression de 0,1 à 1,5 MN/m².

2. Procédé selon la revendication 1, caractérisé en ce qu'on utilise 5 à 10 % de liant, par rapport au poids sec du mélange de perlite et de liant.

3. Procédé selon la revendication 1 ou 2, caractérisé en ce qu'on applique une pression de 0,5 à 1,0 MN/m².

4. Procédé selon l'une des revendications 1 à 3, caractérisé en ce qu'on utilise de la perlite expansée ayant une grosseur de grains de 0,1 à 6 mm.

5. Procédé selon l'une des revendications 1 à 4, caractérisé en ce qu'on ajoute une matière de renfort avantageusement fibreuse, à la perlite, au liant ou à leurs mélanges, avant la compression.

6. Procédé selon l'une des revendications 1 à 5, caractérisé en ce qu'on munit le corps moulé, pendant la compression, d'un enduit de revêtement, par exemple une nappe de fibres de verre.

7. Composition de perlite, caractérisée en ce qu'elle contient de la perlite expansée et 5 à 10 % en poids, sur la base du poids sec du mélange de perlite et de liant, d'un liant choisi dans le groupe formé par (a) de l'hydrate de calcium et (b) les esters de l'acide silicique de formule
Si(OR)₄
dans laquelle R représente un reste alkyle linéaire ou ramifié ayant 1 à 6 atomes de carbone, ainsi que de l'eau.

8. Composition de perlite selon la revendication 7, caractérisée en ce qu'elle contient de la perlite expansée ayant une grosseur de grains de 0,1 à 6 mm.

9. Composition de perlite selon la revendication 7 ou 8, caractérisée en ce qu'elle contient en outre une matière de renfort.

10. Composition de perlite selon la revendication 9, caractérisée en ce qu'elle contient une matière fibreuse de renfort.